# EUROPÄISCHE PATENTSCHRIFT

(11) **EP 1 878 880 B1**
(45) Veröffentlichungstag und Bekanntmachung des Hinweises auf die Patenterteilung: **21.10.2009**
(21) Anmeldenummer: 07111783.2
(22) Anmeldetag: 05.07.2007
(51) Int. Cl.: F01D 25/26, F01D 11/00, F16J 15/06, F16J 15/14, F16L 55/11

(54) **Kreuzflanschdichtung für einen Druckbehälter, insbesondere für ein Turbomaschinengehäuse**
Cross flange seal for a pressure vessel, especially for a turbomachine casing
Etanchéité au croisement de deux joints d'une enceinte sous pression, en particulier pour logement de turbomachine

(30) Priorität: 11.07.2006 CH 11032006
(43) Veröffentlichungstag der Anmeldung: 16.01.2008
(73) Patentinhaber: Alstom Technology Ltd, 5400 Baden (CH)
(72) Erfinder: Norman, Darran-Lee, Horsham, Sussex RH13 6RH (GB); Matan, Mladen, 47000 Karlovac (HR)

(56) Entgegenhaltungen:
- CH-A5- 625 025
- DE-A1- 3 545 849
- FR-A1- 2 335 786
- US-A- 2 677 149
- US-A- 3 240 379
- US-A- 4 165 080

## Beschreibung

### Technisches Gebiet

Die Erfindung betrifft ein Druckgehäuse für eine Maschine, insbesondere für eine Turbomaschine, bestehend aus mehreren Gehäuseteilschalen, die gasdicht miteinander verbunden sind.

### Stand der Technik

Bei einem derartigen Druckgehäuse besitzen die Gehäuseteilschalen Kontaktflächen, die üblicherweise durch eine jeweilige Verschraubung ausserhalb der Dichtungszone gegeneinander gepresst sind, so dass sogenannte Teilfugen zwischen benachbarten Gehäuseteilschalen entstehen.

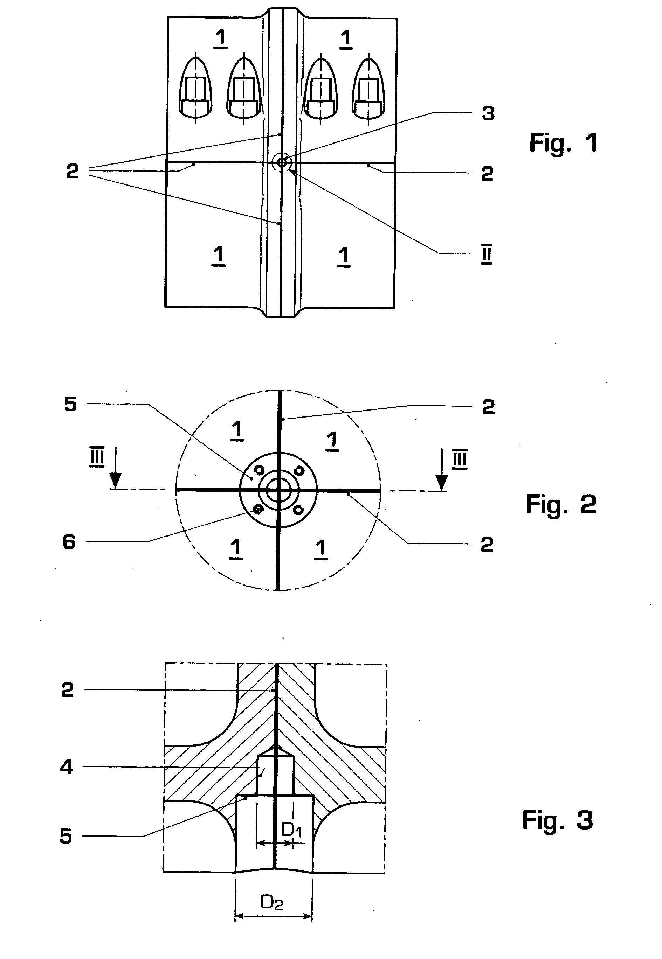

Sind drei oder mehr Gehäuseteilschalen gleichzeitig miteinander zu verbindenden, wie beispielhaft in Fig. 1 mit vier Gehäuseteilschalen dargestellt, so lässt sich der Kreuzungsbereich der Teilfugen, die sogenannte Kreuzfuge, ohne zusätzliche Massnahmen nicht zuverlässig abdichten. An der Kontaktstelle der angrenzenden drei oder mehr Gehäuseteilschalen sind kleine Störungen in der notwendigen Geometrie, wie sie beispielsweise durch Beschädigung der Flanschkanten bei der Montage der meist schweren Gehäuseteilschalen entstehen, praktisch unvermeidlich, was bei den auftretenden hohen Drücken im Inneren einer Turbomaschine zwangsläufig zu Undichtigkeiten führt.

Der Stand der Technik kennt mehrere Lösungsvorschläge zur Abdichtung eines Kreuzflansches mit vier aneinander angrenzenden Gehäuseteilschalen.

Die Druckschriften DE 27 55 356 bzw. CH 625 025 offenbaren bekannte Lösungsvorschläge, wonach die kreuzförmig verlaufenden Teilfugen eines Druckbehälters mittels eines Bolzens im Kreuzungsbereich der Teilfugen abgedichtet werden. Ebenso wird ein Verschweissen der aneinanderstossenden Enden der Gehäuseteilschalen als bereits bekannt beschrieben.

Als neu beschrieben wird in der erwähnten Druckschrift der Einsatz eines Deckelflansches, der mittels einer Dichtung auf einer in die Gehäuseteilschalen eingearbeiteten Sitzfläche abgedichtet wird.

Alle diese bekannten Lösungsvorschläge haben jedoch Nachteile, die einer zuverlässigen, wartungsfreundlichen, d.h. leicht de- und wiedermontierbaren Abdichtung des Kreuzflansches entgegenstehen:
1. Die Abdichtung eines Kreuzflansches mit Hilfe eines Bolzens erfüllt nicht die Forderung an eine zuverlässige, wartungsfreundlichen Abdichtung:
   - Der Bolzen muss bei Überholungen der Turbomaschine ersetzt werden, je nachdem, wie weit Abnutzung und Korrosion seine Haltbarkeit beeinträchtigt haben.
   - Da Bolzen und Bolzensitz in der Regel beim Einbringen und Entfernen des Bolzens beschädigt werden, ist eine Nacharbeit d.h. ein Aufbohren des Bolzensitzes notwendig. Gleichzeitig wird ein neuer, grösserer Bolzen erforderlich.
   - Bei thermischen Verzügen des Gehäuses neigt die Abdichtung mittels eines Bolzens zu Leckagen, da der Bolzen praktisch keine elastische Verformung besitzt, um Verzüge des Gehäuses zu kompensieren.
2. Die Abdichtung eines Kreuzflansches durch Verschweissen:
   - Ein Verschweissen der Gehäuseteilschalen im Kreuzungsbereich der Teilfugen ist zwar möglich, erschwert jedoch ein Auseinandernehmen des Gehäuses und somit eine Überholung der Turbomaschine. Des weiteren ist eine Nacharbeit der Gehäuseteilschalen und deren Neuverschweissung erforderlich.
3. Abdichtung mittels Flansch im Kreuzungsbereich der Teilfugen:
   - Nachteilig ist bei dieser Abdichtungsform, dass die Sitzfläche auf den Gehäuseteilschalen empfindlich gegenüber Kratzer und Schlagstellen ist, wie sie bei der Montage der meist schweren Gehäuseteilschalen leicht entstehen können. Bei thermischen Verzügen oder einem Versatz der Gehäuseteilschalen in einer Richtung senkrecht zur Flanschebene ist die Dichtigkeit nicht mehr gewährleistet, so dass die Dichtfläche überarbeitet werden muss.

### Darstellung der Erfindung

Hier setzt die Erfindung an. Die Erfindung, wie sie in den Ansprüchen gekennzeichnet ist, beschäftigt sich mit dem Problem, für ein Gehäuse der eingangs beschriebenen Art eine zuverlässige, zerstörungsfrei lösbare Abdichtung für den Kreuzungsbereich von drei oder mehreren Teilfugen bereitzustellen, bei welcher die Nachteile der bekannten Abdichtungen vermieden werden und durch konstruktiv einfache Massnahmen, bei allen Betriebszuständen Leckagen verhindert werden.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, dass auf den Aussenflächen der Gehäuseteilschalen im Kreuzungsbereich der Teilfugen ein Sitz für einen Stopfen vorgesehen ist, und dass der Stopfen lösbar in diesem Sitz befestigt ist und mittels einer dauerelastischen, hochdruckfesten Dichtungsmasse in dem Stopfensitz abgedichtet ist.

Eine derartige erfindungsgemäss ausgebildete Abdichtung der Kreuzfugen ist insbesondere zur Abdichtung von Dampfturbinengehäusen geeignet. Grundsätzlich ist die Erfindung anwendbar zur Abdichtung des Kreuzungsbereichs von drei oder mehreren Teilfugen eines Druckgehäuses, wobei im Gehäuseinnenraum sowohl ein Überdruck als auch ein Unterdruck herrschen kann.

Ein entscheidender Vorteil der Erfindung besteht nun darin, dass der Dichtungs-Stopfen in einer unter Überdruck stehenden elastischen Dichtungsmasse quasi schwimmend eingebettet ist. Hierdurch können thermische Verzüge der Gehäuseteilschalen kompensiert werden, ohne dass die Dichtigkeit beeinträchtigt wird. Dies wird dadurch erreicht, dass die Dichtungsmasse in ihrem flüssigen, noch nicht abgebundenen Zustand in den Stopfen eingefüllt wird und dann mittels einer Pressschraube durch geeignete Kanäle im Inneren des Stopfens zu den eigentlichen Dichtungskammern geführt wird. Diese Dichtungskammern sind beispielsweise als ringförmige Nuten in der Stopfenaussenwand ausgebildet und vorzugsweise untereinander so verbunden, dass beim Einfüllen der Dichtungsmasse in den Stopfen, alle Bereiche der Dichtungskammern nacheinander durchströmt werden und somit keine Hohlräume in der Dichtungsmasse entstehen. Dies wird auch dadurch gefördert, dass die verdrängte Luft und ein überschüssiger Teil der Dichtungsmasse aus der zuletzt durchströmten Dichtungskammer durch eine Entlüftungsbohrung aus dem Stopfen austreten können. Durch einen geeigneten Verschluss, wie beispielsweise einen Gewindebolzen, lässt sich die Entlüftungsbohrung verschliessen und ein Teil der Dichtungsmasse in das Stopfeninnere zurückdrängen, wobei in der Dichtungsmasse ein Überdruck erzeugt wird, der die Dichtungsmasse in den Dichtungskammern gegen den Stopfensitz presst und somit nach dem Aushärten der Dichtungsmasse eine solide elastische Dichtung erzeugt.

Vorteilhaft lässt sich die Presswirkung der Dichtung im Betrieb der Turbomaschine weiter verstärken, indem eine Dichtungsmasse verwendet wird, die eine höhere thermische Volumen-Ausdehnung (Beta-Koeffizient in m3/m3K) aufweist, als das Material des Druckbehälters.

Zur Sicherung des Stopfens gegen ein eventuelles Herausrutschen aus seinem Sitz, kann der Stopfen mittels eines Stopfenflansches, der vorzugsweise als integraler Teil des Stopfens ausgebildet ist, an den Gehäuseteilschalen, beispielsweise mit Hilfe von Schrauben, befestigt werden. Von Vorteil ist hierbei, dass der Stopfenflansch keine Dichtungsfunktion besitzt und somit Beschädigungen oder thermische Verzüge des Flanschsitzes auf den Gehäuseteilschalen die Dichtungsfunktion des Stopfens nicht beeinträchtigen. Dem Fachmann sind jedoch auch andere Methoden der Befestigung bekannt, wie zum Beispiel ein Verstemmen des Stopfens in seinem Sitz mittels Federspreizring oder anderen mechanischen Arretierungen.

Ein weiterer Vorteil der erfindungsgemässen Abdichtung von Kreuzfugen besteht darin, dass zur Wartung oder Überholung der betreffenden Maschine, der Stopfen zerstörungsfrei entfernt werden kann und nach entsprechender Reinigung von Stopfen und Stopfensitz derselbe Stopfen wiederverwendet werden kann, ohne dass mechanische Nacharbeiten an Stopfensitz oder Stopfen erforderlich sind. Hierzu werden vorzugsweise 2 benachbarte Gehäuseteilschalen geöffnet, wodurch der Stopfen seitlich zugänglich wird und senkrecht zu seiner Achse herausgenommen werden kann. Mit einem geeigneten Lösungsmittel für die Dichtungsmasse lässt sich diese rückstandslos von dem Stopfen und dem Stopfensitz auf den Gehäuseteilschalen entfernen, so dass der Stopfen erneut zur erfindungsgemässen Abdichtung mittels Dichtmasse verwendet werden kann.

Weitere wichtige Merkmale und Vorteile der erfindungsgemäßen Abdichtung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche Komponenten beziehen.

Es zeigen,
- Fig. 1: Kreuzflansch eines Druckbehälters bestehend aus 4 aneinandergrenzenden Gehäuseteilschalen mit ihren Teilfugen
- Fig. 2: Detail A aus Fig.1:
Teilfugen-Kreuzungsbereich mit Sitz für Stopfenflansch
- Fig.3: Schnitt III-III aus Fig. 2:
Stopfensitz in Gehäuseteilschalen
- Fig. 4: Seitenansicht des Stopfens mit Austrittsbohrung für die Dichtungsmasse und Verbindungskanal zweier Dichtungskammern
- Fig. 5: Aufsicht des Stopfenflansches mit Einfüllbohrung und Entlüftungsaustrittsbohrung für die Dichtungsmasse
- Fig. 6: Schnitt VI-VI aus Fig. 5:
Stopfen mit Eintritts- und Austrittsbohrung für die Dichtungsmasse, sowie Entlüftungseintritts- und Entlüftungsaustrittsbohrung
- Fig. 7: Perspektivische Darstellung des Stopfens. Die Flussrichtungen der Dichtungsmasse sind durch Pfeile angedeutet
- Fig. 8: Teilfugen-Kreuzungsbereich mit eingesetztem Stopfen
- Fig. 9: Schnitt IX-IX aus Fig. 8:
Stopfen mit Pressschraube vor Einpressen der Dichtungsmasse
- Fig. 10: wie Fig. 9, jedoch nach Einpressen der Dichtungsmasse. Die Flussrichtungen der Dichtungsmasse sind durch Pfeile angedeutet
- Fig. 11: wie Fig. 10, jedoch nach Einsetzen der Dichtungsschraube

### Wege zur Ausführung der Erfindung

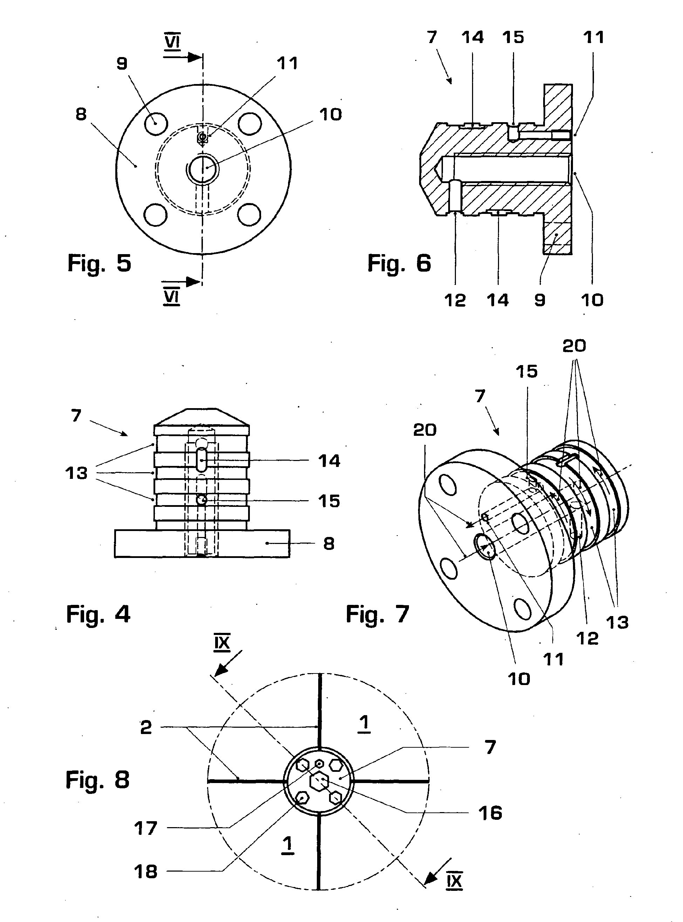

Das in Fig. 1 bis 3 ausschnittsweise dargestellte erfindungsgemässe Druckgehäuse umfasst beispielhaft vier Gehäuseteilschalen (1), die vorzugsweise entlang ihrer Teilfugen (2) gasdicht miteinander verschraubt sind. Da bei einer Turbomaschine, wie zum Beispiel Gasturbine, Dampfturbine, Kompressor oder Verdichter, der Innenraum im allgemeinen einen hohen Überdruck gegenüber dem Aussenraum aufweist, lässt sich der Kreuzungsbereich (3) der Teilfugen (2) ohne weitere Massnahmen nicht zuverlässig abdichten. Um das Austreten von Dampf aus dem Kreuzungsbereich (3) der Teilfugen (2) zuverlässig zu verhindern, ist der Kreuzungsbereich (3) der Teilfugen (2) durch einen eingesetzten Stopfen (7) abgedichtet. Dieser Stopfen (7) weist, wie in den Figuren 4 bis 11 dargestellt, in seinem Inneren ein System von Bohrungen (10, 11, 12, 15) und Kanälen (13, 14) auf, durch das eine dauerelastische Dichtungsmasse (19) in den Zwischenraum zwischen Stopfen (7) und Gehäuseteilschalen (1) gepresst wird.

In Fig. 2 ist der Kreuzungsbereich (3) der Teilfugen (2) als Detail II aus der Fig. 1 vergrössert dargestellt. Man erkennt, dass im Zentrum des Kreuzungsbereichs (3) der Teilfugen (2) ein Stopfensitz (4) für den Stopfen (7) aus den Gehäuseteilschalen (1) herausgearbeitet ist. Ebenso ist auf den Gehäuseteilschalen (2) ein Flanschsitz (5) mit Gewindebohrungen (6) als Gegenstück für den Stopfenflansch (8) vorgesehen. Da der Flanschsitz (5) lediglich zur Befestigung des Stopfens (7) und nicht, wie beim zitierten Stand der Technik (Druckschrift CH 625 025), als Dichtfläche dient, werden keine hohen Anforderungen an die Oberflächengüte des Flanschsitzes (5) gestellt. Fig. 3 zeigt in einem Schnitt III-III aus Fig. 2 den Flanschsitz (5), sowie eine beispielhafte Form des in die Gehäuseteilschalen (1) eingearbeiteten Stopfensitzes (4) in Flucht mit einer Teilfuge (2).

Die Figuren 4 bis 6 zeigen verschiedene Ansichten und Schnitte einer bevorzugten Ausführung des Stopfens (7), der in der erfindungsgemässen Abdichtung verwendet wird, mit seinen Bohrungen (10, 11, 12, 15) und Kanälen (13, 14) zum Einbringen und Verteilen der flüssigen Dichtungsmasse (19). Fig. 7. zeigt eine semitransparente perspektivische Ansicht des Stopfens (7). Die Flussrichtung (20) der Dichtungsmasse (19) ist jeweils durch Pfeile angedeutet. Der rückwärtige Teil des Stopfens (7) ist als integrierter Stopfenflansch (8) ausgebildet und trägt Befestigungsbohrungen (9) zur Fixierung des Stopfens (7) an den Gehäuseteilschalen (1). Im Zentrum des Stopfenflansches (8) befindet sich die Einfüllbohrung (10) für die Dichtungsmasse (19), welche Einfüllbohrung (10) in der Achse des Stopfens (7) verläuft, bis sie auf die radial zur die Achse des Stopfens (7) verlaufende Austrittsbohrung (12) trifft. Diese Austrittsbohrung (12) mündet am Umfang des Stopfens (7) in einer ersten Dichtungskammer (13), die ringförmig in den Aussenumfang des Stopfens (7) gefräst ist. Eine bevorzugte Ausführung des erfindungsgemässen Stopfens (7) trägt drei in axialer Richtung aufeinanderfolgende ringförmige Dichtungskammern (13), wobei die dritte Dichtungskammer (13) dem Stopfenflansch (8) am nächsten liegt. Um die flüssige Dichtungsmasse (19) unterbruchsfrei durch alle drei Dichtungskammern (13) zu führen, sind die erste und zweite Dichtungskammer (13), sowie die zweite und dritte Dichtungskammer (13) jeweils durch einen Verbindungskanal (14) miteinander verbunden. Hierbei ist der Verbindungskanal (14) zwischen der zweiten und dritten Dichtungskammer (13) auf der Seite der Austrittsbohrung (12) in die Aussenwand des Stopfens (7) eingefräst. Der Verbindungskanal (14) zwischen der zweiten und dritten Dichtungskammer (13) ist in die hierzu rückwärtige Seite des Stopfens (7) gefräst. Auf dieser Seite des Stopfens (7) befindet sich ebenfalls die radial in Richtung auf die Achse des Stopfens (7) verlaufende Entlüftungseintrittsbohrung (15) in der dritten ringförmigen Dichtungskammer (13). Diese Entlüftungseintrittsbohrung (15) ist im Inneren des Stopfens (7) mit der Entlüftungsaustrittsbohrung (11) verbunden, welche vom Stopfenflansch (8) aus parallel zur Einfüllbohrung (10) verläuft.

Die perspektivische Zeichnung in Fig. 7 zeigt schematisch anhand von Pfeilen die Flussrichtung (20) der Dichtungsmasse (19) durch den Stopfen (7).

In Fig. 8 ist der Kreuzungsbereich (3) der Teilfugen (2) mit einem eingesetzten Stopfen (7) dargestellt. Auf dem Stopfenflansch (8) sind die Köpfe der Pressschraube (16), der Dichtungsschraube (17), sowie der Flanschschrauben (18) zu sehen.

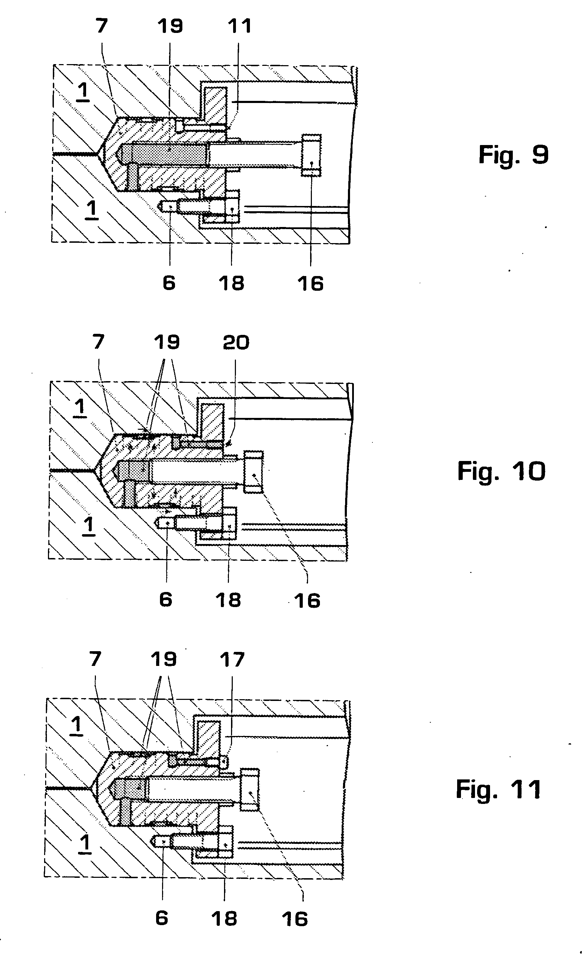

Die Figuren 9 bis 11 zeigen verschiedene Stadien der Einpressung der Dichtungsmasse (19) in bzw. durch den Stopfen (7), sowie den Druckaufbau in der Dichtungsmasse (19) mit Hilfe der Verschlussschraube (17):

Nach dem Einfüllen der flüssigen Dichtungsmasse (19) in den Stopfen (7), wird die Pressschraube (16) in die Einfüllbohrung (10) im Stopfenflansch (8) eingeschraubt und damit die flüssige Dichtungsmasse (19) in den Stopfen (7) hineingepresst (Fig. 9). Durch die Austrittsbohrung (12) tritt die Dichtungsmasse (19) in die erste Dichtungskammer (13) ein, von wo aus sie nach vollständigem Füllen dieser ersten Dichtungskammer (13) durch den ersten Verbindungskanal (14) in die zweite Dichtungskammer (13) gelangt und nach ebenfalls vollständigem Füllen der zweiten Dichtungskammer (13) durch den zweiten Verbindungskanal (14) schliesslich in die dritte Dichtungskammer (13) gelangt. Die vollständige Füllung der jeweiligen Dichtungskammern (13) wird durch eine spezielle, hier um 180° versetzte Anordnung der Verbindungskanäle (14) und der Bohrungen (12, 15) gewährleistet.

In Fig. 10 ist durch Pfeile die Flussrichtung (20) der Dichtungsmasse (19) durch den Stopfen (7) dargestellt. Zur vollständigen Füllung sämtlicher Bohrungen (10, 11, 12, 15) und Kanäle (13, 14) des Stopfens (7) wird mit Hilfe der Pressschraube (16) die Dichtungsmasse (19) so lange durch den Stopfen (7) gepresst, bis die durch die Dichtungsmasse (19) verdrängte Luft vollständig aus der Entlüftungsaustrittsbohrung (11) entwichen ist und bereits ein geringer Teil der Dichtungsmasse (19) austritt. Sodann wird die Entlüftungsaustrittsbohrung (11) mit einer Verschlussschraube (17) verschlossen und durch Eindrehen dieser Verschlussschraube (17) in den Stopfenflansch (8) ein Überdruck in der Dichtungsmasse (19) aufgebaut, so dass die Dichtungsmasse (19) in den Dichtkammern (13) zuverlässig den Stopfen (7) gegenüber den Gehäuseteilschalen (1) abdichtet.

Nach dem Abbinden der flüssigen Dichtungsmasse (19) ist hierdurch eine zuverlässige, elastische und demontierbare Abdichtung eines Kreuzungsbereichs (3) der Teilfugen (2) an einem Druckbehälter erreicht, die selbst bei thermischen Verzügen der Gehäuseteilschalen (1) ihre Dichtungswirkung behält.

Im Rahmen der Überholung einer Turbomaschine lässt sich, nach Öffnen der Gehäuseteilschalen (1), der Stopfen (7) problemlos und zerstörungsfrei entfernen. Nach der Reinigung von Stopfen (7) und Stopfensitz (4) in den Gehäuseteilschalen (1) mit Hilfe geeigneter Lösungsmittel, kann der Stopfen (7) bei der Wiedermontage der Turbomaschine weiter verwendet werden, ohne dass in der Regel der Stopfensitz (4) in den Gehäuseteilschalen (1) nachgearbeitet werden muss.

Die hier dargestellten Ausführungsformen sind rein exemplarisch und somit ohne Beschränkung der Allgemeinheit, insbesondere lässt sich das erfindungsgemässe Prinzip der Kreuzflanschabdichtung auch auf 3, 5 oder mehr Gehäuseteilschalen anwenden, die in einem gemeinsamen Punkt abzudichten sind.

### Bezugszeichenliste

- 1: Gehäuseteilschale
- 2: Teilfuge
- 3: Kreuzungsbereich von 2
- 4: Stopfensitz
- 5: Flanschsitz
- 6: Gewindebohrung
- 7: Stopfen
- 8: Stopfenflansch
- 9: Befestigungsbohrung
- 10: Einfüllbohrung
- 11: Entlüftungsaustrittsbohrung
- 12: Austrittsbohrung
- 13: Dichtungskammer
- 14: Verbindungskanal
- 15: Entlüftungseintrittsbohrung
- 16: Pressschraube
- 17: Dichtungsschraube
- 18: Flanschschraube
- 19: Dichtungsmasse
- 20: Flussrichtung von 19

## Patentansprüche

1. Abdichtung für den Kreuzungsbereich (3) der Teilfugen (2) eines zusammengesetzten Druckbehälters, umfassend einen Stopfen (7), eine Dichtmasse (19) und zumindest drei Gehäuseteilschalen (1), wobei
im Kreuzungsbereich (3) der Teilfugen (2) der Stopfen (7) eingefügt ist **dadurch gekennzeichnet, dass** die flüssige abbindbare Dichtmasse (19) in mindestens eine, an dem Stopfen (7) als ringförmige Nut ausgeführte Dichtungskammer (13) eingefüllt ist und mit den Gehäuseteilschalen gasdicht verbunden ist und zerstörungsfrei entfernbar ist.

2. Abdichtung nach Anspruch 1,
**dadurch gekennzeichnet,**
**dass** der Stopfen (7) ein System von Bohrungen (10, 11, 12, 15) und Kanälen (14) aufweist, durch das eine Dichtungsmasse (19) zu den Dichtungsbereichen des Stopfens (7) geleitet wird.

3. Abdichtung nach einem der Ansprüche 1 oder 2,
**dadurch gekennzeichnet,**
**dass** der Stopfen (7) mit einer Einfüllbohrung (10) für die Dichtungsmasse (19) versehen ist und diese Einfüllbohrung (10) mittels einer Pressschraube (16) zum Einpressen der Dichtungsmasse (19) verschlossen ist.

4. Abdichtung nach einem der Ansprüche 1 bis 3,
**dadurch gekennzeichnet,**
**dass** der Stopfen (7) mit einer Entlüftungsaustrittsbohrung (11) zum Austritt überschüssiger Dichtungsmasse (19) und der durch sie verdrängten Luft versehen ist.

5. Abdichtung nach einem der Ansprüche 1 bis 4,
**dadurch gekennzeichnet,**
**dass** die Entlüftungsaustrittsbohrung (11) des Stopfens (7) mittels einer Dichtungsschraube (17) verschlossen ist, die beim Einschrauben einen Überdruck in der Dichtungsmasse (19) erzeugt.

6. Abdichtung nach einem der Ansprüche 1 bis 5,
**dadurch gekennzeichnet,**
**dass** der Stopfen (7) an seinem freien Ende als Stopfenflansch (8) ausgebildet ist und an den Gehäuseteilschalen (1) befestigt ist.

7. Abdichtung nach einem der Ansprüche 1 bis 6,
**dadurch gekennzeichnet,**
**dass** der Stopfen (7), nach Reinigung von Stopfen (7) und Stopfensitz (4), wiederverwendbar ist.

8. Abdichtung nach einem der Ansprüche 1 bis 5,
**dadurch gekennzeichnet,**
**dass** die Dichtungsmasse (19) nach dem Abbinden hochdruckfest und elastisch ist.

9. Abdichtung nach einem der Ansprüche 1 bis 5 oder nach Anspruch 8,
**dadurch gekennzeichnet,**
**dass** die Dichtungsmasse (19) eine höhere thermische VolumenAusdehnung (Beta-Koeffizient in m3/m3K) aufweist, als das Material des Druckbehälters.

## Claims

1. Seal for the intersection region (3) of the parting joints (2) of an assembled pressure vessel, comprising a plug (7), a sealing compound (19) and at least three casing shell sections (1),
the plug (7) being inserted in the intersection region (3) of the parting joints (2), **characterized in that** the liquid, settable sealing compound (19) is poured into at least one sealing chamber (13) which is constructed on the plug (7) as an annular groove and is connected in a gastight manner to the casing shell sections and is non-destructively removable.

2. Seal according to Claim 1,
**characterized in that**
the plug (7) has a system of holes (10, 11, 12, 15) and passages (14), through which a sealing compound (19) is directed to the sealing regions of the plug (7).

3. Seal according to one of Claims 1 and 2,
**characterized in that**
the plug (7) is provided with a filling hole (10) for the sealing compound (19), and this filling hole (10) is sealed off by means of a pressure screw (16) for pressing in the sealing compound (19).

4. Seal according to one of Claims 1 to 3,
**characterized in that**
the plug (7) is provided with a vent outlet hole (11) for escape of surplus sealing compound (19) and the air which is displaced by it.

5. Seal according to one of Claims 1 to 4,
**characterized in that**
the vent outlet hole (11) of the plug (7) is sealed off by means of a sealing screw (17) which, when screwing in, creates an overpressure in the sealing compound (19).

6. Seal according to one of Claims 1 to 5,
**characterized in that**
the plug (7) on its free end is formed as a plug flange (8) and is fastened on the casing shell sections (1).

7. Seal according to one of Claims 1 of 6,
**characterized in that**
the plug (7), after cleaning of plug (7) and plug seat (4), is reusable.

8. Seal according to one of Claims 1 to 5,
**characterized in that**
the sealing compound (19), after setting, is high pressure-resistant and elastic.

9. Seal according to one of Claims 1 to 5 or according to Claim 8,
**characterized in that**
the sealing compound (19) has a higher thermal volumetric expansion (beta coefficient in m3/m3K) than the material of the pressure vessel.

## Revendications

1. Etanchéité pour la zone de croisement (3) des joints partiels (2) d'une enceinte sous pression assemblée, comprenant un bouchon (7), une masse d'étanchéité (19) et au moins trois coques partielles de boîtier (1),
le bouchon (7) étant inséré dans la zone de croisement (3) des joints partiels (2),
**caractérisée en ce que** la masse d'étanchéité (19) liquide pouvant être liée est versée dans au moins une chambre d'étanchéité (13) réalisée sous forme de rainure annulaire sur le bouchon (7), est connectée de manière étanche aux gaz aux coques partielles de boîtier et peut être enlevée sans destruction.

2. Etanchéité selon la revendication 1,
**caractérisée en ce que**
le bouchon (7) présente un système d'alésages (10, 11, 12, 15) et de canaux (14), à travers lequel une masse d'étanchéité (19) est guidée vers les zones d'étanchéité du bouchon (7).

3. Etanchéité selon l'une quelconque des revendications 1 ou 2,
**caractérisée en ce que**
le bouchon (7) est pourvu d'un alésage de remplissage (10) pour la masse d'étanchéité (19) et cet alésage de remplissage (10) est fermé au moyen d'une vis de pressage (16) pour enfoncer la masse d'étanchéité (19).

4. Etanchéité selon l'une quelconque des revendications 1 à 3,
**caractérisée en ce que**
le bouchon (7) est pourvu d'un alésage de sortie de désaérage (11) pour la sortie de masse d'étanchéité en excès (19) et de l'air repoussé par celle-ci.

5. Etanchéité selon l'une quelconque des revendications 1 à 4,
**caractérisée en ce que**
l'alésage de sortie de désaérage (11) du bouchon (7) est fermé au moyen d'une vis d'étanchéité (17) qui produit, lors du vissage, une surpression dans la masse d'étanchéité (19).

6. Etanchéité selon l'une quelconque des revendications 1 à 5,
**caractérisée en ce que**
le bouchon (7) est réalisé à son extrémité libre sous forme de bride de bouchon (8) et est fixé aux coques partielles de boîtier (1).

7. Etanchéité selon l'une quelconque des revendications 1 à 6,
**caractérisée en ce que**
le bouchon (7), après le nettoyage du bouchon (7) et du siège de bouchon (4), peut être réutilisé.

8. Etanchéité selon l'une quelconque des revendications 1 à 5,
**caractérisée en ce que**
la masse d'étanchéité (19), après sa liaison, est résistante aux hautes pressions et élastique.

9. Etanchéité selon l'une quelconque des revendications 1 à 5 ou selon la revendication 8,
**caractérisée en ce que**
la masse d'étanchéité (19) présente une dilatation volumique thermique (coefficient bêta en m³/m³K), plus élevée que celle du matériau de l'enceinte sous pression.
